(19) Europäisches Patentamt
European Patent Office
Office européen des brevets

(11) **EP 2 568 295 B1**

(12) **FASCICULE DE BREVET EUROPEEN**

(45) Date de publication et mention
de la délivrance du brevet:
**15.01.2014   Bulletin 2014/03**

(51) Int Cl.:
***G01P 5/00*** *(2006.01)*      ***G01P 13/02*** *(2006.01)*
***B64D 43/02*** *(2006.01)*

(21) Numéro de dépôt: **12182735.6**

(22) Date de dépôt: **03.09.2012**

(54) **Procédé et dispositif d'estimation automatique d'une vitesse air d'un aéronef**

Verfahren und Vorrichtung zur automatischen Abschätzung der Luftgeschwindigkeit eines Flugzeugs

Method and apparatus for the automatic estimation of airspeed of an aircraft

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **09.09.2011  FR 1158005**

(43) Date de publication de la demande:
**13.03.2013   Bulletin 2013/11**

(73) Titulaire: **Airbus Opérations SAS**
**31060 Toulouse (FR)**

(72) Inventeur: **Walter, Stéphane**
**31490 Brax (FR)**

(74) Mandataire: **Gevers France**
**41, avenue de Friedland**
**75008 Paris (FR)**

(56) Documents cités:
**EP-A2- 2 348 285      US-A1- 2006 241 823
US-B2- 7 617 023**

**Description**

La présente invention concerne un procédé et un dispositif d'estimation automatique d'une vitesse air d'un aéronef.

On sait qu'un aéronef, en particulier un avion de transport, est généralement pourvu d'une centrale anémobarométrique de type ADC (« Air Data Computer » en anglais) qui fournit, en temps réel, une vitesse conventionnelle de type CAS (pour « Calibrated Air Speed » en anglais). Pour ce faire, cette centrale anémobarométrique est associée à des sondes de pression totale (tubes de Pitot), et elle peut, par exemple, faire partie d'un système de données air et de données inertielles de type ADIRS (pour « Air Data Inertial Reference System » en anglais), qui représente une centrale de références inertielles intégrant les fonctions de la centrale anémobarométrique.

Or, des données air (notamment des vitesses air) erronées ou absentes peuvent, par exemple, apparaître lors de pannes de systèmes, d'une information erronée de capteurs, ou lors de la présence de givre ou de cristaux de glace.

On sait que le givre est un phénomène météorologique, dont les conditions d'apparition sont liées à l'humidité et à la température statique. Le givre peut avoir des effets sur les capteurs, tels que les sondes de pression totale, jusqu'à conduire à une altération de la mesure, la rendant parfois erronée (figée ou biaisée).

Il est donc intéressant de pouvoir disposer sur l'aéronef d'une vitesse air alternative, susceptible d'être déterminée même en cas de défaillance d'une centrale anémobarométrique et/ou de sondes de pression associées, notamment des sondes Pitot.

On sait, par ailleurs, qu'il est possible de calculer une vitesse air dite vitesse aérodynamique, à partir des valeurs courantes de paramètres (masse, facteur de charge, incidence,...) liés à l'aéronef, et notamment des paramètres aérodynamiques (facteur de charge, incidence,...).

Toutefois, les paramètres utilisés pour calculer cette vitesse air, qui sont disponibles sur un aéronef, ne sont pas suffisamment précis pour obtenir une vitesse air qui soit suffisamment fiable et précise pour pouvoir être utilisée sur un aéronef.

La présente invention a pour objet de remédier aux inconvénients précités. Elle concerne un procédé pour estimer automatiquement une vitesse air d'un aéronef, en particulier d'un avion de transport, qui est particulièrement précise et qui est susceptible d'être déterminée même en présence de données air erronées.

A cet effet, selon l'invention, ledit procédé d'estimation automatique d'une vitesse air, procédé selon lequel on réalise, de façon automatique et itérative, l'opération suivante :

a) on reçoit une vitesse air dite vitesse aérodynamique qui est calculée (dans une étape préliminaire), à partir des valeurs courantes de paramètres (masse, facteur de charge, incidence,...) liés à l'aéronef et comprenant des paramètres aérodynamiques,

est remarquable en ce que l'on réalise, de plus, de façon automatique et itérative, les opérations suivantes :
b) on reçoit une vitesse conventionnelle courante, générée par une centrale anémobarométrique ;
c) à l'aide de cette vitesse conventionnelle et d'une vitesse air estimée, on forme une vitesse résiduelle ;
d) on compare cette vitesse résiduelle à une valeur de seuil ; et
e) en fonction de cette comparaison :

- tant que cette vitesse résiduelle est inférieure ou égale à ladite valeur de seuil, on l'intègre de manière à obtenir une valeur corrective que l'on ajoute à ladite vitesse aérodynamique pour obtenir finalement la vitesse air estimée ; et
- dès que cette vitesse résiduelle est supérieure à une valeur de seuil (pendant une durée de confirmation), illustrant la détection d'un problème de validité de la vitesse conventionnelle, et tant que cela reste le cas, on ajoute une valeur corrective figée à ladite vitesse aérodynamique pour obtenir la vitesse air estimée.

Avantageusement, ladite valeur corrective figée correspond à la dernière valeur corrective calculée, avant la détection d'un problème de validité de la vitesse conventionnelle.

De plus, avantageusement, à l'étape c) :

- dans un premier mode de réalisation, on soustrait à la vitesse conventionnelle la vitesse estimée à l'itération précédente de manière à obtenir ladite vitesse résiduelle ; et
- dans un second mode de réalisation, on divise la vitesse conventionnelle par la vitesse air de manière à obtenir ladite vitesse conventionnelle.

Ainsi, grâce à l'invention, on dispose à bord de l'aéronef d'une information de vitesse air alternative (par rapport aux vitesses usuelles), qui :

- d'une part, présente une précision suffisamment élevée pour qu'elle puisse être utilisée par divers systèmes de l'aéronef ; et
- d'autre part, est susceptible d'être déterminée même en cas de défaillance d'une centrale anémobarométrique et/ou de sondes de pression associées, notamment des sondes Pitot.

Le procédé conforme à l'invention permet de remédier simultanément aux problèmes existant pour deux modes de calcul usuels différents de vitesse air :

- d'une part, en l'absence de problème de validité de la vitesse conventionnelle, il permet, par la correction réalisée sur la vitesse aérodynamique (de manière à la faire converger vers ladite vitesse conventionnelle), de remédier au problème de précision réduite d'une vitesse aérodynamique, due notamment à l'imprécision des paramètres utilisés, tels que l'incidence ou la masse de l'aéronef notamment ; et
- d'autre part, en cas de problème de validité (ou de perte) de la vitesse conventionnelle (notamment lors d'un problème sur les sondes Pitot, par exemple suite à un givrage), il permet de ne pas en tenir compte de cette dernière vitesse.

Dans ce dernier cas, on dispose toujours d'une valeur précise, puisque l'on continue à corriger la vitesse aérodynamique, et ceci par l'ajout d'une valeur corrective figée qui est la plus précise possible, étant donné qu'elle correspond à la dernière valeur corrective calculée avant la détection du problème de validité de la vitesse conventionnelle.

De façon avantageuse, pour l'intégration mise en oeuvre à l'étape e), on utilise une constante de temps qui est déterminée préalablement de manière à réaliser un compromis entre, d'une part, une efficacité de détection d'un problème de validité de la vitesse conventionnelle, et d'autre part, une convergence rapide en cas d'imprécision de la vitesse aérodynamique.

En outre, avantageusement :

- on filtre ladite vitesse aérodynamique, avant de l'utiliser à l'étape e) ; et/ou
- au décollage de l'aéronef, on initialise l'intégration mise en oeuvre à l'étape e) de telle sorte que la vitesse air estimée est égale à la vitesse conventionnelle.

Dans une étape supplémentaire f), on fournit ladite vitesse air estimée à des moyens utilisateurs. La vitesse air, estimée conformément à l'invention, peut être utilisée par divers systèmes de l'aéronef nécessitant une information de vitesse précise et fiable.

En outre, de façon avantageuse, on présente ladite vitesse air estimée sur un écran de visualisation du poste de pilotage de l'aéronef. Dans ce cas, on filtre, de préférence, cette vitesse air estimée, avant de la présenter sur l'écran de visualisation.

La présente invention concerne également un dispositif d'estimation automatique d'une vitesse air d'un aéronef, en particulier d'un avion de transport.

A cet effet, selon l'invention, ledit dispositif du type comportant des moyens pour recevoir, de façon itérative, une vitesse air dite vitesse aérodynamique qui est calculée à partir des valeurs courantes de paramètres liés à l'aéronef, comprenant des paramètres aérodynamiques, est remarquable en ce qu'il comporte, de plus :

- des moyens pour recevoir, de façon itérative, une vitesse conventionnelle courante, qui est générée par une centrale anémobarométrique ;
- des moyens pour former, de façon itérative, à l'aide de cette vitesse conventionnelle et d'une vitesse air estimée, une vitesse résiduelle. Pour ce faire, ces derniers moyens, soit soustraient à la vitesse conventionnelle la vitesse estimée à l'itération précédente, soit divisent la vitesse conventionnelle par la vitesse air, pour former ladite vitesse résiduelle ;
- des moyens pour comparer, de façon itérative, cette vitesse résiduelle à une valeur de seuil ; et
- des moyens pour :

  • tant que cette vitesse résiduelle est inférieure ou égale à ladite valeur de seuil, l'intégrer de manière à former une valeur corrective qui est ajoutée à ladite vitesse aérodynamique pour obtenir la vitesse air estimée ; et
  • dès que cette vitesse résiduelle est supérieure à une valeur de seuil (de préférence pendant une durée de confirmation), illustrant la détection d'un problème de validité de la vitesse conventionnelle, et tant que cela reste le cas, ajouter une valeur corrective figée à ladite vitesse aérodynamique pour obtenir la vitesse air estimée.

En outre, avantageusement, ledit dispositif comporte également :

- des moyens pour déterminer lesdites valeurs courantes des paramètres liés à l'aéronef et pour calculer ladite vitesse aérodynamique à partir de ces valeurs courantes ;
- une centrale anémobarométrique pour déterminer la vitesse conventionnelle ; et
- des moyens utilisateurs de la vitesse air qui est estimée par ledit dispositif, et notamment un écran de visualisation du poste de pilotage de l'aéronef.

Le dispositif conforme à l'invention présente, notamment, les avantages suivants :

- une robustesse lors d'un changement de configuration aérodynamique (becs/volets, aérofreins,...) ;
- une détection rapide d'un givrage de sondes Pitot et d'une information CAS associée erronée. Ceci permet notamment d'éviter une réaction inappropriée de l'équipage à une indication de vitesse air erronée, risquant notamment d'entraîner le dépassement de la vitesse maximale autorisée ; et
- une adaptation rapide à tout type d'aéronef.

La présente invention concerne, en outre, un aéronef, en particulier un avion de transport, qui comporte un dispositif tel que celui précité.

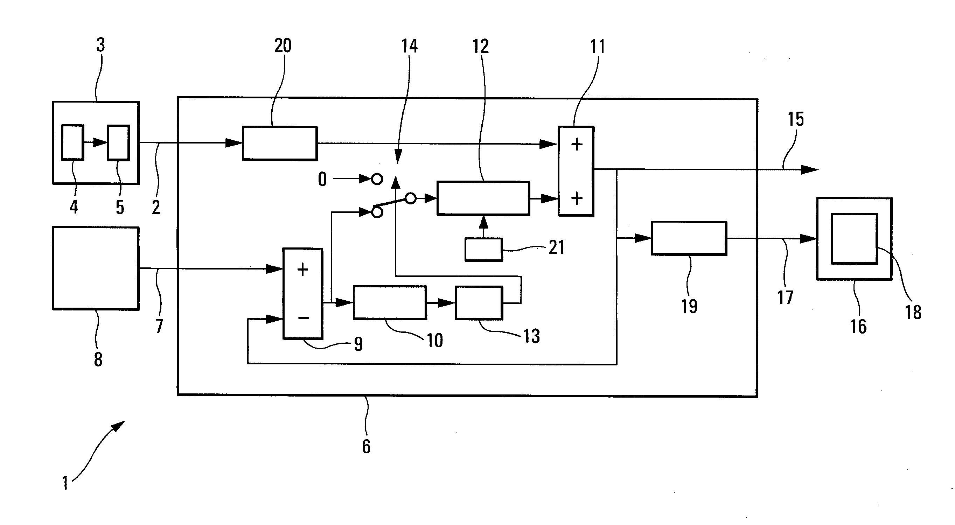

L'unique figure du dessin annexé fera bien comprendre comment l'invention peut être réalisée. Cette figure unique est le schéma synoptique d'un dispositif conforme à l'invention.

Le dispositif 1 conforme à l'invention et représenté schématiquement sur la figure est destiné à estimer automatiquement une vitesse air d'un aéronef (non représenté), en particulier d'un avion de transport, de manière à fournir une vitesse air alternative, qui est particulièrement précise et qui n'est pas perturbée ou biaisée, notamment, par des données air erronées.

Ledit dispositif 1 qui est embarqué sur l'aéronef, est du type comportant des moyens 2 pour recevoir, de façon itérative, une vitesse air dite vitesse aérodynamique qui est calculée à partir des valeurs courantes de paramètres liés à l'aéronef, comprenant notamment des paramètres aérodynamiques.

Pour ce faire, ledit dispositif 1 comporte une unité usuelle 3 qui comprend :

- des moyens 4 usuels, en particulier des moyens de mesure, pour déterminer, de façon itérative, lesdites valeurs courantes des paramètres (masse, facteur de charge, incidence,...) liés à l'aéronef ; et
- des moyens 5 pour calculer, de façon itérative, à l'aide desdites valeurs courantes, la vitesse aérodynamique.

Lesdits moyens 5 calculent ladite vitesse aérodynamique Vcaero, de façon usuelle, à l'aide de l'expression suivante :

$$Vcaero = \sqrt{\frac{M * 9,81 * nz}{0,5 * \rho_0 * S * Cz\alpha * (\alpha + \alpha_0)}}$$

dans laquelle :

- $M$ est la masse de l'aéronef en kg ;
- $nz$ est le facteur de charge vertical ;
- $\rho_0$ est la densité de l'air, qui est égale à 1,225 kg/m$^3$ ;
- $Cz\alpha$ représente le gradient de portance et vaut environ 6 ;
- $\alpha$ est l'incidence de l'aéronef ; et
- $\alpha_0$ est l'incidence à portance nulle, qui dépend de la configuration des becs et volets et du braquage des aérofreins.

On sait que certains des paramètres précédents (utilisés pour calculer la vitesse aérodynamique Vcaero), tels qu'ils sont disponibles sur l'aéronef, ne sont pas extrêmement précis. A titre d'exemple, la masse est calculée, de façon itérative, en fonction d'une masse totale entrée par le pilote avant le décollage (qui représente une estimation approximative, en fonction notamment du nombre de passagers) et de la consommation courante de fuel. Par conséquent, la vitesse aérodynamique Vcaero calculée à l'aide de l'expression précitée n'est pas suffisamment précise pour pouvoir être utilisée telle quelle sur un aéronef.

Aussi, selon l'invention, pour déterminer une vitesse air estimée qui est notamment particulièrement précise, ledit dispositif 1 comporte une unité de traitement d'informations 6 de type itératif, qui comprend, en plus desdits moyens 2 pour recevoir la vitesse aérodynamique Vcaero :

- des moyens (à savoir une liaison 7) pour recevoir, de façon itérative, une vitesse conventionnelle courante Vc, de type ADC (« Air Data Computer » en anglais), qui est générée de manière usuelle par une centrale anémobarométrique 8 de l'aéronef ;
- des moyens 9 pour soustraire à cette vitesse conventionnelle Vc, à chaque itération, une vitesse estimée à l'itération précédente, de manière à obtenir une vitesse résiduelle VR ;
- des moyens de comparaison 10 pour comparer, de façon itérative, cette vitesse résiduelle VR à une valeur de seuil λ, par exemple 20 noeuds ; et
- des moyens 11 pour ajouter une valeur corrective (qui dépend de ladite comparaison) à la vitesse aérodynamique Vcaero (générée par l'unité 3) afin d'obtenir la vitesse air estimée Vcest.

Plus précisément :

- tant que la vitesse résiduelle VR est inférieure ou égale à ladite valeur de seuil λ, des moyens 12 intègrent cette vitesse résiduelle VR de manière à former la valeur corrective (qui est ajoutée par les moyens 11 à ladite vitesse aérodynamique Vcaero pour obtenir la vitesse air estimée Vcest). Selon l'invention, cette intégration est telle que la vitesse Vcaero est corrigée de manière à converger vers la vitesse conventionnelle Vc ; et
- dès que cette vitesse résiduelle VR est supérieure à la valeur de seuil λ (et ceci pendant au moins une durée de confirmation Tc), illustrant la détection d'un problème de validité de la vitesse conventionnelle Vc, et tant que cela reste le cas, les moyens 11 utilisent une valeur corrective gelée qu'ils ajoutent à ladite vitesse aérodynamique Vcaero pour obtenir la vitesse air estimée Vcest.

Pour ce faire, l'unité 6 comprend également un moyen de confirmation 13 qui est monté en aval des moyens de comparaison 10 pour détecter un problème de validité de la vitesse conventionnelle Vc, lorsque la vitesse résiduelle VR est supérieure à la valeur de seuil λ, pendant au moins la durée de confirmation Tc. Lors d'une telle détection, un moyen de commutation 14 est commandé pour amener l'entrée des moyens 12, non plus à la sortie des moyens 9 qui génèrent la vitesse résiduelle VR, mais à une valeur nulle, de sorte que les moyens 10 utilisent alors la valeur corrective figée (qui est enregistrée).

Cette valeur corrective figée correspond à la dernière valeur corrective calculée par les moyens d'intégration 12, avant la détection (par lesdits moyens 10 et 13) d'un problème de validité de la vitesse conventionnelle Vc.

Dans un mode de réalisation particulier, lesdits moyens 9, au lieu de soustraire à la vitesse conventionnelle Vc la vitesse estimée à l'itération précédente, divisent la vitesse conventionnelle par la vitesse air pour former ladite vitesse conventionnelle. Le reste des opérations décrites en référence à la figure sont appliqués de façon similaire à ce mode de réalisation particulier.

Ainsi, grâce au dispositif 1 conforme à l'invention, on dispose à bord de l'aéronef d'une information de vitesse air alternative Vcest (par rapport aux vitesses usuelles), qui :

- d'une part, présente une précision suffisamment élevée pour qu'elle puisse être utilisée par divers systèmes de l'aéronef ; et
- d'autre part, est susceptible d'être déterminée même en cas de problème de validité de la vitesse conventionnelle Vc, c'est-à-dire même en cas de défaillance d'une centrale anémobarométrique 8 ou de sondes de pression associées, notamment des sondes Pitot.

Le dispositif 1 conforme à l'invention permet ainsi de remédier simultanément aux problèmes existant sur deux modes de calcul usuels de vitesse air :

- d'une part, en l'absence de problème de validité de la vitesse conventionnelle Vc, il permet, par la correction réalisée sur la vitesse aérodynamique Vcaero de manière à la faire converger vers cette vitesse conventionnelle Vc, de remédier au problème de précision réduite d'une vitesse aérodynamique Vcaero ; et
- d'autre part, en cas de problème de validité (ou de perte) de la vitesse conventionnelle Vc (notamment lors d'un problème sur les sondes Pitot) de ne pas en tenir compte de cette dernière.

Dans ce dernier cas, on dispose toujours d'une vitesse air estimée Vcest précise, puisque l'on continue à corriger la vitesse aérodynamique Vcaero, par l'ajout d'une valeur corrective figée qui est la plus précise possible, étant donné qu'elle correspond à la dernière valeur corrective calculée avant la détection du problème de validité de la vitesse conventionnelle Vc.

Pour l'intégration mise en oeuvre par les moyens 12, on utilise une constante de temps τ qui est déterminée préalablement de manière à réaliser un compromis. Plus précisément, cette constante de temps τ doit être suffisamment rapide pour permettre une convergence rapide en cas d'imprécision de la vitesse aérodynamique, mais pas trop rapide pour pouvoir détecter efficacement une vitesse Vc erronée (10s<τ < 50s).

La vitesse air estimée Vcest vérifie ainsi la relation :

$$Vcest = Vcaero.(\tau s /(1 + \tau s)) + Vc.(1/(1 + \tau s))$$

Le dispositif 1 conforme à l'invention comporte également des moyens (liaison 15) pour fournir la vitesse air estimée par l'unité 6 à des moyens utilisateurs (non représentés). La vitesse air, estimée conformément à l'invention, peut donc être utilisée par divers systèmes de l'aéronef, qui nécessitent une information de vitesse précise et fiable.

En particulier, dans un mode de réalisation particulier, ledit dispositif 1 comporte, de plus, des moyens d'affichage 16 pour présenter ladite vitesse air estimée Vcest (reçue par une liaison 17) sur un écran de visualisation 18 du poste de pilotage de l'aéronef. Dans ce cas, de préférence, l'unité de traitement 6 comprend un filtre 19 pour filtrer ladite vitesse air estimée, avant de la présenter sur l'écran de visualisation 18, de manière à obtenir un confort visuel satisfaisant.

En outre, ledit dispositif 1 comporte également la centrale anémobarométrique 8 pour déterminer, de façon usuelle, la vitesse conventionnelle Vc.

Par ailleurs, dans un mode de réalisation particulier, ledit dispositif 1 comporte, de plus, un filtre 20 qui est monté entre l'unité 3 et les moyens 11. Ce filtre 20 est nécessaire en raison d'informations de facteur de charge et d'incidence, bruitées. De plus, ce filtre permet de gérer et adapter les différentes informations lorsque le taux d'échantillonnage est faible et différent pour chaque paramètre. Sa constante de temps ne doit  pas être trop élevée pour ne pas trop retarder le calcul aérodynamique en cas d'accélération ou de décélération élevée.

Par ailleurs, au décollage de l'aéronef, c'est-à-dire lors de l'activation du dispositif 1, ce dernier initialise l'intégrateur (moyens 12), via des moyens 21, à une valeur Vc-Vcaero de telle sorte que la vitesse air estimée Vcest est alors égale à la vitesse conventionnelle Vc.

Le dispositif 1 conforme à l'invention présente, notamment, les avantages suivants :

- une robustesse lors d'un changement de configuration aérodynamique (becs/volets, aérofreins,...) ;
- une détection rapide d'un givrage de sondes Pitot et d'une information CAS associée erronée. Ceci permet notamment d'éviter une réaction inappropriée de l'équipage à une indication de vitesse air erronée, risquant notamment d'entraîner le dépassement de la vitesse maximale autorisée ; et
- une adaptation rapide à tout type d'aéronef.

## Revendications

1. Procédé d'estimation automatique d'une vitesse air d'un aéronef, procédé selon lequel on réalise, de façon automatique et itérative, l'opération suivante :

   a) on reçoit une vitesse air dite vitesse aérodynamique, qui est calculée à partir de valeurs courantes de paramètres liés à l'aéronef, comprenant des paramètres aérodynamiques,
   **caractérisé en ce que** l'on réalise, de plus, de façon automatique et itérative, les opérations successives suivantes :
   b) on reçoit une vitesse conventionnelle courante, générée par une centrale anémobarométrique (8) ;
   c) à l'aide de cette vitesse conventionnelle et d'une vitesse air estimée, on forme une vitesse résiduelle ;
   d) on compare cette vitesse résiduelle à une valeur de seuil ; et
   e) en fonction de cette comparaison :

   - tant que cette vitesse résiduelle est inférieure ou égale à ladite valeur de seuil, on l'intègre de manière à former une valeur corrective que l'on ajoute à ladite vitesse aérodynamique pour obtenir la vitesse air estimée ; et
   - dès que cette vitesse résiduelle est supérieure à ladite valeur de seuil, illustrant la détection d'un problème de validité de la vitesse conventionnelle, et tant que cela reste le cas, on ajoute une valeur corrective figée à ladite vitesse aérodynamique pour obtenir la vitesse air estimée.

2. Procédé selon la revendication 1,
   **caractérisé en ce que** ladite valeur corrective figée correspond à la dernière valeur corrective calculée, avant la détection d'un problème de validité de la vitesse conventionnelle.

**3.** Procédé selon l'une des revendications 1 et 2,
**caractérisé en ce que** l'on filtre ladite vitesse aérodynamique, avant de l'utiliser à l'étape e).

**4.** Procédé selon l'une quelconque des revendications précédentes,
**caractérisé en ce que**, pour l'intégration mise en oeuvre à l'étape e), on utilise une constante de temps qui est déterminée préalablement de manière à réaliser un compromis entre une efficacité de détection d'un problème de validité de la vitesse conventionnelle et une convergence rapide en cas d'imprécision de la vitesse aérodynamique.

**5.** Procédé selon l'une quelconque des revendications précédentes,
**caractérisé en ce qu'**au décollage de l'aéronef, on initialise l'intégration mise en oeuvre à l'étape e) de telle sorte que la vitesse air estimée est égale à la vitesse conventionnelle.

**6.** Procédé selon l'une quelconque des revendications précédentes,
**caractérisé en ce que**, dans une étape supplémentaire f), on présente ladite vitesse air estimée sur un écran de visualisation (18) du poste de pilotage de l'aéronef.

**7.** Procédé selon la revendication 6,
**caractérisé en ce que** l'on filtre ladite vitesse air estimée, avant de la présenter sur l'écran de visualisation (18) à l'étape f).

**8.** Procédé selon l'une quelconque des revendications précédentes,
**caractérisé en ce que**, dans une étape supplémentaire f), on fournit ladite vitesse air estimée à des moyens utilisateurs.

**9.** Procédé selon l'une quelconque des revendications précédentes,
**caractérisé en ce que**, dans une étape préliminaire, on calcule la vitesse aérodynamique, à partir desdites valeurs courantes de paramètres liés à l'aéronef, comprenant des paramètres aérodynamiques.

**10.** Procédé selon l'une quelconque des revendications 1 à 9,
**caractérisé en ce qu'**à l'étape c), on soustrait à la vitesse conventionnelle la vitesse estimée à l'itération précédente de manière à obtenir ladite vitesse résiduelle.

**11.** Procédé selon l'une quelconque des revendications 1 à 9,
**caractérisé en ce qu'**à l'étape c), on divise la vitesse conventionnelle par la vitesse air de manière à obtenir ladite vitesse conventionnelle.

**12.** Dispositif d'estimation automatique d'une vitesse air d'un aéronef, ledit dispositif (1) comportant des moyens (2) pour recevoir, de façon itérative, une vitesse air dite vitesse aérodynamique qui est calculée à partir des valeurs courantes de paramètres liés à l'aéronef, comprenant des paramètres aérodynamiques,
**caractérisé en ce qu'**il comporte, de plus :

- des moyens (7) pour recevoir, de façon itérative, une vitesse conventionnelle courante, qui est générée par une centrale anémobarométrique (8) ;
- des moyens (9) pour former, de façon itérative, à l'aide de cette vitesse conventionnelle et d'une vitesse air estimée, une vitesse résiduelle ;
- des moyens (10) pour comparer, de façon itérative, cette vitesse résiduelle à une valeur de seuil ; et
- des moyens (11, 12) pour :

• tant que cette vitesse résiduelle est inférieure ou égale à ladite valeur de seuil, l'intégrer de manière à former une valeur corrective qui est ajoutée à ladite vitesse aérodynamique pour obtenir la vitesse air estimée ; et
• dès que cette vitesse résiduelle est supérieure à ladite valeur de seuil, illustrant la détection d'un problème de validité de la vitesse conventionnelle, et tant que cela reste le cas, ajouter une valeur corrective figée à ladite vitesse aérodynamique pour obtenir la vitesse air estimée.

**13.** Dispositif selon la revendication 12,
**caractérisé en ce qu'**il comporte, de plus, des moyens (3) pour déterminer, de façon itérative, lesdites valeurs courantes des paramètres liés à l'aéronef et pour calculer ladite vitesse aérodynamique à partir desdites valeurs courantes.

14. Dispositif selon l'une des revendications 12 et 13,
    **caractérisé en ce qu'**il comporte, de plus, une centrale anémobarométrique (8) pour déterminer, de façon itérative, la vitesse conventionnelle.

15. Dispositif selon l'une des revendications 12 à 14,
    **caractérisé en ce qu'**il comporte, de plus, des moyens utilisateurs de ladite vitesse air estimée.

**Patentansprüche**

1. Verfahren zur automatischen Schätzung einer Geschwindigkeit relativ zur Luft eines Luftfahrzeugs, wobei gemäß diesem Verfahren automatisch und iterativ die folgende Operation durchgeführt wird:

   a) es wird eine Geschwindigkeit relativ zur Luft empfangen, "aerodynamische Geschwindigkeit" genannt, welche ausgehend von aktuellen Werten von mit dem Luftfahrzeug zusammenhängenden Parametern, die aerodynamische Parameter umfassen, berechnet wird,
   **dadurch gekennzeichnet, dass** außerdem automatisch und iterativ die folgenden aufeinander folgenden Operationen durchgeführt werden:
   b) es wird eine aktuelle berichtigte Fluggeschwindigkeit empfangen, die von einem Luftdatenrechner (8) erzeugt wird;
   c) mithilfe dieser berichtigten Fluggeschwindigkeit und einer geschätzten Geschwindigkeit relativ zur Luft wird eine Restgeschwindigkeit gebildet;
   d) diese Restgeschwindigkeit wird mit einem Schwellenwert verglichen; und
   e) in Abhängigkeit von diesem Vergleich:

   - solange diese Restgeschwindigkeit kleiner oder gleich dem Schwellenwert ist, wird sie integriert, um einen Korrekturwert zu bilden, welcher zu der aerodynamischen Geschwindigkeit addiert wird, um die geschätzte Geschwindigkeit relativ zur Luft zu erhalten; und
   - sobald diese Restgeschwindigkeit größer als der Schwellenwert ist, was die Erkennung eines Problems der Gültigkeit der berichtigten Fluggeschwindigkeit anzeigt, und solange dies der Fall bleibt, wird zu der aerodynamischen Geschwindigkeit ein fester Korrekturwert addiert, um die geschätzte Geschwindigkeit relativ zur Luft zu erhalten.

2. Verfahren nach Anspruch 1,
   **dadurch gekennzeichnet, dass** der feste Korrekturwert dem letzten berechneten Korrekturwert vor der Erkennung eines Problems der Gültigkeit der berichtigten Fluggeschwindigkeit entspricht.

3. Verfahren nach einem der Ansprüche 1 und 2,
   **dadurch gekennzeichnet, dass** die aerodynamische Geschwindigkeit gefiltert wird, bevor sie im Schritt e) verwendet wird.

4. Verfahren nach einem der vorhergehenden Ansprüche,
   **dadurch gekennzeichnet, dass** für die im Schritt e) durchgeführte Integration eine Zeitkonstante verwendet wird, welche zuvor derart bestimmt wird, dass ein Kompromiss zwischen einer Effizienz der Erkennung eines Problems der Gültigkeit der berichtigten Fluggeschwindigkeit und einer schnellen Konvergenz im Falle einer Ungenauigkeit der aerodynamischen Geschwindigkeit erzielt wird.

5. Verfahren nach einem der vorhergehenden Ansprüche,
   **dadurch gekennzeichnet, dass** beim Abflug des Luftfahrzeugs die im Schritt e) durchgeführte Integration initialisiert wird, derart, dass die geschätzte Geschwindigkeit relativ zur Luft gleich der berichtigten Fluggeschwindigkeit ist.

6. Verfahren nach einem der vorhergehenden Ansprüche,
   **dadurch gekennzeichnet, dass** in einem zusätzlichen Schritt f) die geschätzte Geschwindigkeit relativ zur Luft auf einem Displaygerät (18) des Cockpits des Luftfahrzeugs dargestellt wird.

7. Verfahren nach Anspruch 6,

**dadurch gekennzeichnet, dass** die geschätzte Geschwindigkeit relativ zur Luft gefiltert wird, bevor sie im Schritt f) auf dem Displaygerät (18) dargestellt wird.

8. Verfahren nach einem der vorhergehenden Ansprüche,
**dadurch gekennzeichnet, dass** in einem zusätzlichen Schritt f) die geschätzte Geschwindigkeit relativ zur Luft Mitteln, welche sie verwenden, zur Verfügung gestellt wird.

9. Verfahren nach einem der vorhergehenden Ansprüche,
**dadurch gekennzeichnet, dass** in einem vorbereitenden Schritt die aerodynamische Geschwindigkeit ausgehend von den aktuellen Werten von mit dem Luftfahrzeug zusammenhängenden Parametern, die aerodynamische Parameter umfassen, berechnet wird.

10. Verfahren nach einem der Ansprüche 1 bis 9,
**dadurch gekennzeichnet, dass** im Schritt c) von der berichtigten Fluggeschwindigkeit die in der vorhergehenden Iteration geschätzte Geschwindigkeit subtrahiert wird, um die Restgeschwindigkeit zu erhalten.

11. Verfahren nach einem der Ansprüche 1 bis 9,
**dadurch gekennzeichnet, dass** im Schritt c) die berichtigte Fluggeschwindigkeit durch die Geschwindigkeit relativ zur Luft dividiert wird, um die Restgeschwindigkeit zu erhalten.

12. Vorrichtung zur automatischen Schätzung einer Geschwindigkeit relativ zur Luft eines Luftfahrzeugs, wobei die Vorrichtung (1) Mittel (2) zum Empfangen, auf iterative Weise, einer Geschwindigkeit relativ zur Luft, "aerodynamische Geschwindigkeit" genannt, aufweist, welche ausgehend von den aktuellen Werten von mit dem Luftfahrzeug zusammenhängenden Parametern, die aerodynamische Parameter umfassen, berechnet wird,
**dadurch gekennzeichnet, dass** sie außerdem aufweist:

- Mittel (7) zum Empfangen, auf iterative Weise, einer aktuellen berichtigten Fluggeschwindigkeit, welche von einem Luftdatenrechner (8) erzeugt wird;
- Mittel (9) zum Bilden, auf iterative Weise, einer Restgeschwindigkeit mithilfe dieser berichtigten Fluggeschwindigkeit und einer geschätzten Geschwindigkeit relativ zur Luft;
- Mittel (10) zum Vergleichen, auf iterative Weise, dieser Restgeschwindigkeit mit einem Schwellenwert; und
- Mittel (11, 12), um:

• solange diese Restgeschwindigkeit kleiner oder gleich dem Schwellenwert ist, sie zu integrieren, um einen Korrekturwert zu bilden, welcher zu der aerodynamischen Geschwindigkeit addiert wird, um die geschätzte Geschwindigkeit relativ zur Luft zu erhalten; und
• sobald diese Restgeschwindigkeit größer als der Schwellenwert ist, was die Erkennung eines Problems der Gültigkeit der berichtigten Fluggeschwindigkeit anzeigt, und solange dies der Fall bleibt, zu der aerodynamischen Geschwindigkeit einen festen Korrekturwert zu addieren, um die geschätzte Geschwindigkeit relativ zur Luft zu erhalten.

13. Vorrichtung nach Anspruch 12,
**dadurch gekennzeichnet, dass** sie außerdem Mittel (3) zum Bestimmen, auf iterative Weise, der aktuellen Werte der mit dem Luftfahrzeug zusammenhängenden Parameter und zum Berechnen der aerodynamischen Geschwindigkeit ausgehend von diesen aktuellen Werten aufweist.

14. Vorrichtung nach einem der Ansprüche 12 und 13,
**dadurch gekennzeichnet, dass** sie außerdem einen Flugdatenrechner (8) aufweist, um auf iterative Weise die berichtigte Fluggeschwindigkeit zu bestimmen.

15. Vorrichtung nach einem der Ansprüche 12 bis 14,
**dadurch gekennzeichnet, dass** sie außerdem Mittel aufweist, welche die geschätzte Geschwindigkeit relativ zur Luft verwenden.

**Claims**

1. A method for automatically estimating aircraft airspeed, being a method wherein the following step is carried out on an automatic and iterative way:

a) a so-called aerodynamic airspeed, being calculated from current values of parameters related to the aircraft and comprising aerodynamic parameters, is received,

**characterized in that**, moreover, the following steps are carried out on an automatic and iterative way:

b) a current conventional speed generated by an anemobarometric unit (8) is received;

c) a residual speed is formed thru such conventional speed and an estimated airspeed;

d) such residual speed is compared to a threshold value; and

e) as a function of such comparison:

- as long as such residual speed is lower than or equal to said threshold value, it is integrated so as to obtain a corrective value being added to said aerodynamic speed to finally get the estimated airspeed; and
- as soon as such residual speed is higher than said threshold value illustrating the detection of a validity problem for the conventional speed, and as long as this remains the case, a fixed corrective value is added to said aerodynamic speed to obtain the estimated airspeed.

2. The method according to claim 1,
**characterized in that** said fixed corrective value corresponds to the last corrective value being calculated, before the detection of a validity problem for the conventional speed.

3. The method according to claim 1 or 2, **characterized in that** said aerodynamic speed is filtered before using it at step e).

4. The method according to any one of the preceding claims,
**characterized in that**, for the integration implemented at step e), a time constant is used, which is previously determined so as to realize a compromise between a detection efficiency for the validity problem of the conventional speed, and a quick convergence in case of an imprecision of the aerodynamic speed.

5. The method according to any one of the preceding claims,
**characterized in that**, upon the takeoff of the aircraft, the integration implemented at step e) is initialized so that the estimated airspeed is equal to the conventional speed.

6. The method according to any one of the preceding claims,
**characterized in that**, in an extra step f), said estimated airspeed is shown on a viewing screen (18) in the cockpit of the aircraft.

7. The method according to claim 6,
**characterized in that** said estimated airspeed is filtered before showing it on the viewing screen (18) at step f).

8. The method according to any one of the preceding claims,
**characterized in that**, in an extra step f), said estimated airspeed is supplied to user means.

9. The method according to any one of the preceding claims,
**characterized in that**, in a preliminary step, the aerodynamic speed is calculated from said current values of parameters related to the aircraft, comprising aerodynamic parameters.

10. The method according to any one of claims 1 to 9,
**characterized in that**, at step c), the speed estimated on preceding iteration is subtracted from the conventional speed so as to obtain said residual speed.

11. The method according to any one of claims 1 to 9,
**characterized in that**, at step c), the conventional speed is divided by the airspeed so as to obtain said conventional speed.

12. An automatic airspeed estimation device for an aircraft, said device (1) comprising means (2) to iteratively receive a so-called aerodynamic airspeed being calculated from current values of parameters related to the aircraft, comprising aerodynamic parameters,
**characterized in that** it further comprises:

- means (7) to iteratively receive a current conventional speed being generated by an anemobarometric unit (8);
- means (9) to iteratively form, thru such conventional speed and an estimated airspeed, a residual speed;
- means (10) to iteratively compare such residual speed to a threshold value; and
- means (11, 12) for:

• as long as such residual speed is lower than or equal to said threshold value, integrating it so as to form a corrective value being added to said aerodynamic speed to obtain the estimated airspeed; and
• as soon as such residual speed is higher than said threshold value illustrating the detection of a validity problem for the conventional speed, and as long as this remains the case, adding a fixed corrective value to said aerodynamic speed to obtain the estimated airspeed.

13. The device according to claim 12,
    **characterized in that** it comprises moreover means (3) to iteratively determine said current values of parameters related to the aircraft and to calculate said aerodynamic speed from said current values.

14. The device according to one of claims 12 and 13,
    **characterized in that** it also comprises an anemobarometric unit (8) to iteratively determine the conventional speed.

15. The device according to one of claims 12 to 14,
    **characterized in that** also comprises user means for said estimated airspeed.